# EUROPÄISCHE PATENTSCHRIFT

(11) **EP 1 284 097 B1**
(45) Veröffentlichungstag und Bekanntmachung des Hinweises auf die Patenterteilung: **01.03.2006**
(21) Anmeldenummer: 02017556.8
(22) Anmeldetag: 07.08.2002
(51) Int. Cl.: A01B 71/06, B60K 25/06

(54) **Zapfwelleneinrichtung und Fahrzeug**
Vehicle and pto-device
Véhicule et dispositif de prise de force

(30) Priorität: 08.08.2001 US 924640
(43) Veröffentlichungstag der Anmeldung: 19.02.2003
(73) Patentinhaber: DEERE & COMPANY, Moline, Illinois 61265-8098 (US)
(72) Erfinder: Hayden, Stephen R., Madison, WI 53705 (US)
(74) Vertreter: Lau-Loskill, Philipp

(56) Entgegenhaltungen:
- EP-A- 1 067 007
- FR-A- 2 227 146
- US-A- 4 811 614
- PATENT ABSTRACTS OF JAPAN vol. 012, no. 392 (M-755), 19. Oktober 1988 (1988-10-19) & JP 63 141835 A (YANMAR DIESEL ENGINE CO LTD), 14. Juni 1988 (1988-06-14)

## Beschreibung

Die Erfindung betrifft eine Zapfwelleneinrichtung sowie ein Fahrzeug zur Rasen-, Garten- und Grundstückspflege mit einer Zapfwelleneinrichtung.

Fahrzeug, insbesondere Fahrzeuge zur Rasen-, Garten- und Grundstückspflege, welche an ihrer Vorderseite mit antreibbaren Anbaugeräten ausgestattet werden können, weisen eine Zapfwelle auf, die sich von dem Fahrzeug aus gesehen, nach vorn erstreckt. Derartige Fahrzeuge bzw. Rasentraktoren mit Zapfwellen, welche sich nach vorn erstrecken, sind bekannt; jedoch muss die Zapfwelle meist abgenommen werden, wenn ein Mähwerk verwendet werden soll.

Eine bekannte Zapfwelle weist eine Sechskantwelle auf, welche bei einem Abnehmen von dem Fahrzeug aus ihrem Lager herausgleiten kann. Derartige Zapfwellen sind jedoch schwierig zu entfernen und erfordern die Verwendung von Werkzeugen. Darüber hinaus kann es vorkommen, dass sie durch Schmutz und Rost blockiert werden.

Eine ähnliche Zapfwelleneinrichtung ist aus EP-A-1 067 007 bekannt.

Das der Erfindung zugrunde liegende Problem wird in der schwierigen Handhabung bekannter Zapfwellen gesehen.

Dieses Problem wird erfindungsgemäß durch die Lehre der Patentansprüche 1 bzw. 6 gelöst, wobei in den weiteren Patentansprüchen die Lösung in vorteilhafter Weise weiterentwickelnde Merkmale aufgeführt sind.

Auf diese Weise wird eine abnehmbare Zapfwelle zur Verfügung gestellt, deren rückwärtiger Endbereich durch ein Kreuzgelenk mit einer Ausgangswelle einer Getriebeachse eines Fahrzeugs verbunden werden kann. Ein vorderer Endbereich wird durch ein Lager abgestützt, das an Mitteln zum Abnehmen der Zapfwelle von der Konsole, welche mit einem vorderen Bereich des Fahrzeugs zum Entfernen der Zapfwelle verbunden ist, vorgesehen ist. Die Mittel zum Abnehmen der Zapfwelle weisen eine Platte, welche abnehmbar mit der Konsole verbunden ist, und eine Verriegelung auf, die mit der Konsole derart zusammenwirkt, dass die Platte in einer ersten Stellung mit der Konsole verbunden hält und in einer zweiten Stellung die Platte freigibt.

In der Zeichnung ist ein nachfolgend näher beschriebenes Ausführungsbeispiel der Erfindung dargestellt. Es zeigt:
- Fig. 1: eine perspektivische Ansicht eines als Rasentraktor ausgeführten Fahrzeugs von vorn betrachtet,
- Fig. 2: eine rückwärtige Seitenansicht einer Zapfwelle des Fahrzeugs,
- Fig. 3: eine Explosionsdarstellung der Zapfwelle, einer zugehörigen Konsole sowie eines Lagers,
- Fig. 4: eine vergrößerte rückwärtige Ansicht der Zapfwelle und der Konsole,
- Fig. 5: eine vergrößerte Darstellung einer Verriegelungseinrichtung,
- Fig. 6: eine perspektivische Darstellung der Verriegelungseinrichtung entsprechend Fig. 5 und
- Fig. 7: eine vergrößerte perspektivische Darstellung entsprechend Fig. 4 von unten betrachtet.

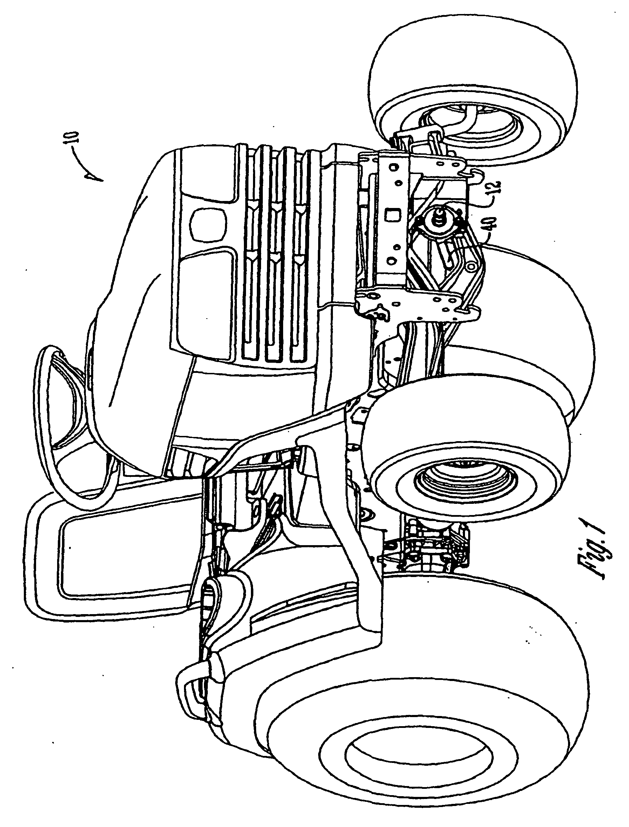

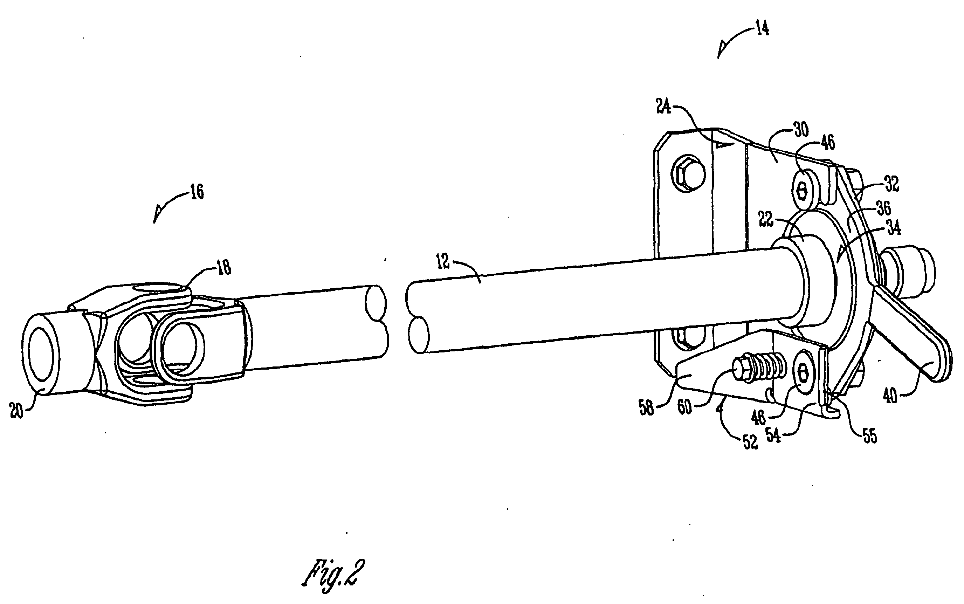

Es wird Bezug auf die Zeichnungen und insbesondere auf Fig. 1 genommen, in der ein Rasentraktor bzw. ein Fahrzeug 10 gezeigt wird. Zwischen vorderen und rückwärtigen Endbereichen des Fahrzeugs 10 erstreckt sich eine Zapfwelle 12 mit einem vorderen Endbereich 14 und einem rückwärtigen Endbereich 16. Wie es am Besten in Fig. 2 gesehen werden kann, wird der rückwärtige Endbereich 16 durch einen Kreuzgelenk 18 abgestützt, welcher wirksam an einer Getriebeachsenausgangswellenverbindung bzw. einer Ausgangsverbindung 20 angebracht ist.

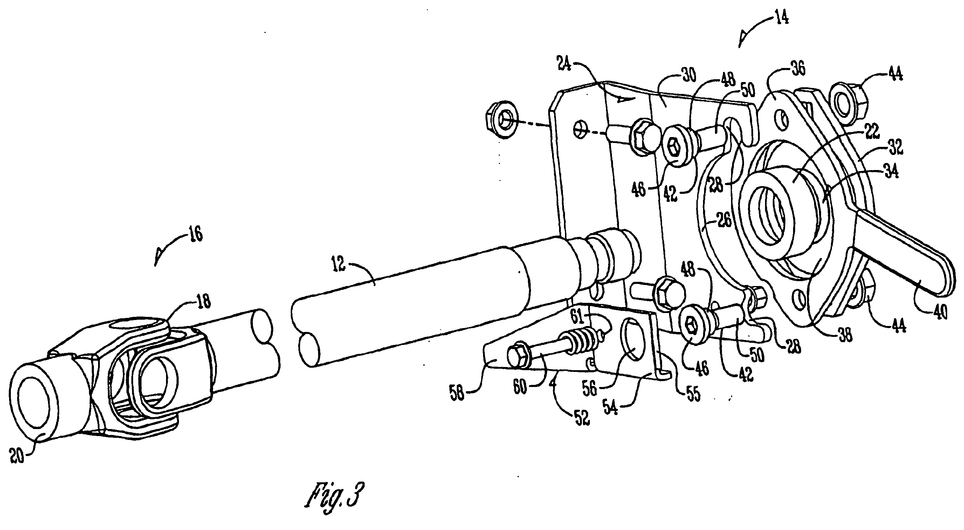

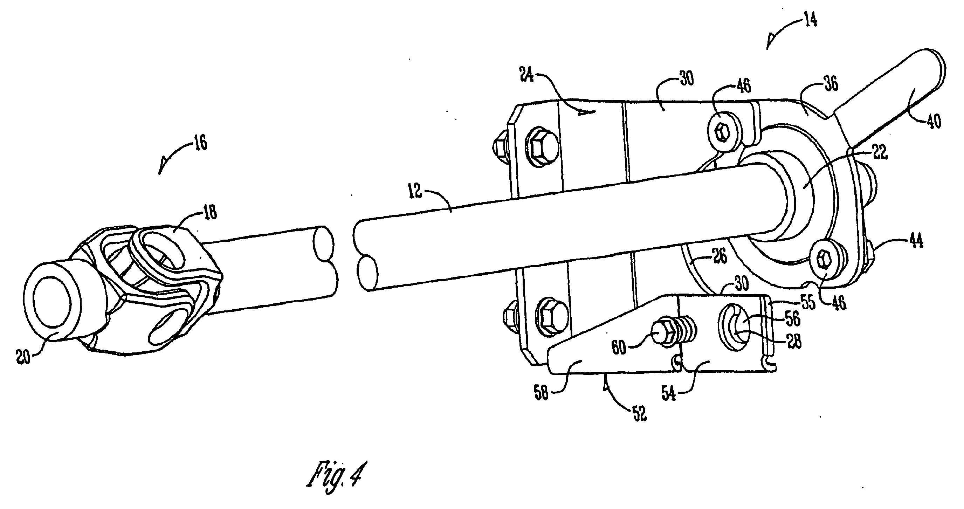

Der vordere Endbereich 14 wird durch eine Lagerverriegelungsmanschette 22 abgestützt, die an einem Mittel zum Abnehmen der Zapfwelle 12 von einer Konsole 24 angebracht ist, um ein Entfernen der Zapfwelle 12 zu erlauben. Die Konsole 24 ist im Wesentlichen L-förmig mit einer halbkreisförmigen Aussparung 26 und Aufnahmeaussparungen 28, welche in entsprechenden Schultern 30 der Konsole 24 vorgesehen sind (siehe Fig. 3 und 4), ausgebildet.

Ein Lagerflansch 32 ist an einem Lager 34 gesichert. Mit dem Lagerflansch 32 ist eine Platte 36 mit einer zentralen Öffnung 38 und einem Griff 40 verbunden. Der Lagerflansch 32 und die Platte 36 sind durch Schulterschrauben 42 und Muttern 44 verbunden. Die Schulterschrauben 42 weisen einen Kopf 46, einen Schulterbereich 48 und einen Schaft 50 auf.

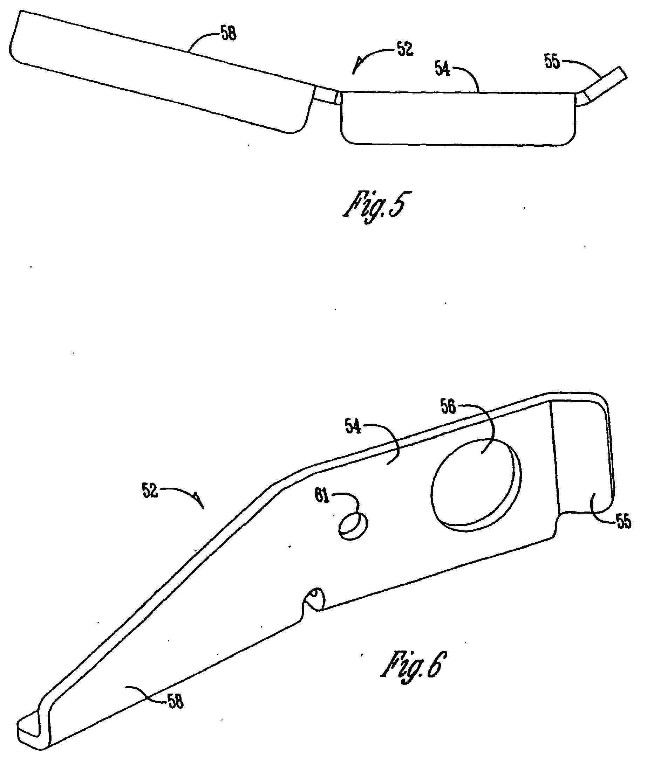

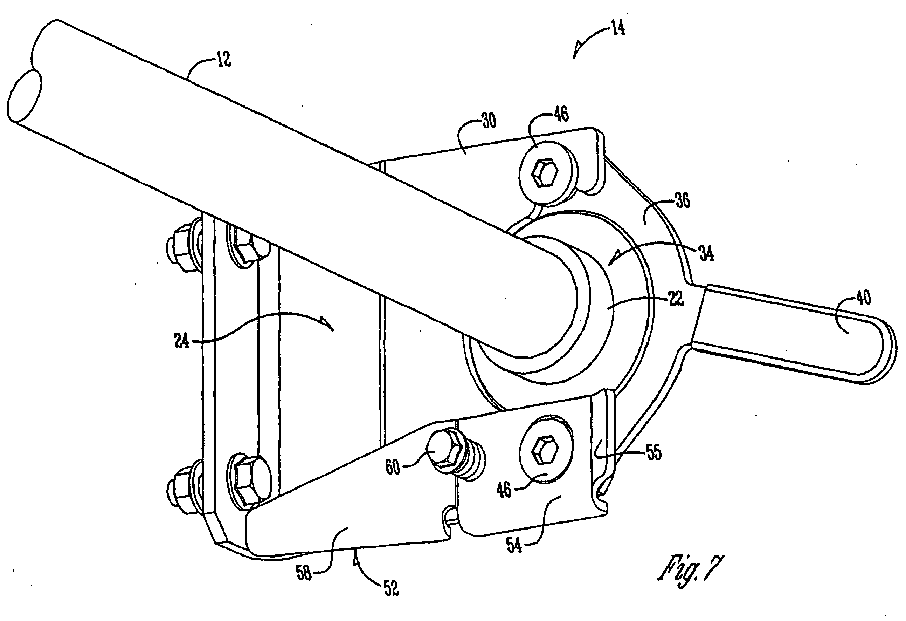

Eine Verriegelung 52 mit einem ersten, eine Durchgangsbohrung 56 aufweisenden Flansch 54 und mit einem zweiten Flansch 58, der sich von der Konsole 24 weg nach außen erstreckt, sind mit der unteren Schulter der Konsole 24 durch einen federbelasteten Stift 60 verbunden. Ein Endbereich des Flansches 54 ist bezüglich der Ausrichtung der Durchgangsbohrung 56 gebogen und bildet einen Flansch 55 (Fig. 5 und 6), der einen Winkel von etwa 20° mit dem Flansch 54 bildet. Tritt bei der Montage der Kopf 46 der Schraube 42 mit dem Flansch 55 in Eingriff, so wird dieser nach außen gedrückt, so dass der Flansch 54 hinsichtlich Fig. 4 nach links kippt und die Schulter 48 der Schraube 42 in die Bohrung 56 gleitet und von dieser aufgenommen wird. Der Flansch 54 springt dann infolge der Federkraft in seine Ausgangsstellung zurück.

Wenn sie zusammengebaut sind, passen die Schulterschrauben 42, welche den Lagerflansch 32 und die Platte 36 verbinden, in die Aufnahmeaussparungen 28 der Konsole 24. Der erste Flansch 54 der Verriegelung 52 nimmt den Kopf 46 des unteren Schulterbolzens 42 in der Bohrung 56 auf. Der federbelastete Stift 60, der sich durch eine Aussparung 61 zur Verbindung mit der Konsole 54 erstreckt, hält den ersten Flansch 54 in einer Stellung, in der der Kopf 46 der Schulterschraube 42 in der Bohrung 56, wie dies in Fig. 2 gezeigt wird, aufgenommen wird. In dieser Stellung hält die Verriegelung 52 die Platte 36 in Verbindung mit der Konsole 24. Der Griff 40 wird verwendet, um die Bauteile von der Stellung in Fig. 2 in die Stellung in Fig. 4, und umgekehrt, zu bewegen.

Um die Zapfwelle 12 zu entfernen, wird auf den zweiten Flansch 58 der Verriegelung 52 Kraft ausgeübt, so dass die Verriegelung 52 um den federbelasteten Stift 60 verschwenkt und der erste Flansch 54 sich von der Konsole 24 nach außen bewegt, wie es am Besten aus Fig. 4 gesehen werden kann. Wenn die Verriegelung 52 sich in dieser Stellung befindet, gibt sie die Platte 36 von der Konsole 24 frei, um ein Entfernen der Zapfwelle 12 von der Konsole 24 und dann ein Nach-vorn-Ziehen zu erlauben, um das Kreuzgelenk 18 von der Ausgangsverbindung 20 einer Rotationsantriebsquelle (nicht gezeigt) an dem Fahrzeug 10 verschiebend zu trennen. Wie es durch diese Beschreibung gezeigt wird, wird ein Entfernen der Zapfwelle 12 von der Vorderseite des Fahrzeugs 10 aus vorgenommen und erfordert keine Verwendung von Werkzeugen. Diese Erfindung schließt die Notwendigkeit aus, an einer Verriegelungsmanschette an dem Kreuzgelenk 18 nach rückwärts zu ziehen, welche an der Ausgangsverbindung angebracht ist, um die Zapfwelle zu entfernen. Somit erreicht die vorliegende Erfindung das Ziel, eine Einrichtung zur Verfügung zu stellen, um eine Zapfwelle leicht ohne Werkzeuge zu entfernen, welche eine minimale Anzahl von Bauteilen aufweist.

Durch die Beschreibung der bevorzugten Ausführungsform wird es offensichtlich, dass verschiedene Veränderungen durchgeführt werden können.

## Patentansprüche

1. Zapfwelleneinrichtung für ein Fahrzeug (10), insbesondere ein Fahrzeug zur Rasen-, Garten- und Grundstückspflege, mit einer sich von dem Fahrzeug (10) nach vorn erstreckenden, abnehmbaren Zapfwelle (12), deren rückwärtiger Endbereich (16) mit einer vorzugsweise in einem rückwärtigen Bereich des Fahrzeugs (10) vorgesehenen Antriebsquelle durch Verschieben lösbar verbindbar ist, einer in einem vorderen Bereich des Fahrzeugs (10) angeordneten Konsole (24), wobei ein vorderer Endbereich (14) der Zapfwelle (12) durch ein an der Konsole (24) lösbar anbringbares Lager (34) abgestützt wird, **dadurch gekennzeichnet, dass** eine mit der Konsole (24) verbundenen Verriegelung (52) die Zapfwelle (12) in einer Betriebsstellung an der Konsole (24) halten und in einer zweiten Stellung freigeben kann.

2. Zapfwelleneinrichtung nach Anspruch 1, **dadurch gekennzeichnet, dass** das Lager (34) einen Griff (40) aufweist.

3. Zapfwelleneinrichtung nach Anspruch 1 oder 2, **dadurch gekennzeichnet, dass** die Verriegelung (52) mit der Konsole (24) schwenkbar verbindbar ist und das Lager (34) in einer ersten Schwenkstellung verriegelt und in einer zweiten Schwenkstellung freigibt.

4. Zapfwelleneinrichtung nach einem oder mehreren der vorherigen Ansprüche, **dadurch gekennzeichnet, dass** die Verriegelung (52) in Richtung einer ihrer Schwenkstellungen federbelastet ist.

5. Zapfwelleneinrichtung nach einem oder mehreren der vorherigen Ansprüche, **dadurch gekennzeichnet, dass** das Lager (34) einen Lagerflansch (32) aufweist, welcher lösbar mit der Konsole (24) verbunden ist.

6. Fahrzeug (10), insbesondere ein Fahrzeug zur Rasen-, Garten- und Grundstückspflege, mit einer Zapfwelleneinrichtung nach einem oder mehreren der vorherigen Ansprüche.

## Revendications

1. Dispositif de prise de force pour un véhicule (10), en particulier un véhicule pour l'entretien des pelouses, jardins et champs, comportant une prise de force (12) amovible, qui s'étend vers l'avant à partir du véhicule (10) et dont la zone d'extrémité postérieure (16) peut être assemblée de manière amovible par translation avec une source d'entraînement prévue de préférence dans la partie arrière du véhicule (10), et comportant une console (24) agencée dans une partie avant du véhicule (10), une zone d'extrémité antérieure (14) de la prise de force (12) étant supportée par un palier (34) apte à être assemblé de manière amovible à la console (24), **caractérisé en ce qu'**un système de verrouillage (52), assemblé à la console (24), maintient la prise de force (12) dans une position de service sur la console (24) et peut la libérer dans une deuxième position.

2. Dispositif de prise de force selon la revendication 1, **caractérisé en ce que** le palier (34) est muni d'une poignée (40).

3. Dispositif de prise de force selon la revendication 1 ou 2, **caractérisé en ce que** le système de verrouillage (52) peut être assemblé de manière pivotante avec la console (24), et le palier (34) verrouille dans une première position de pivotement et libère dans une deuxième position de pivotement.

4. Dispositif de prise de force selon une ou plusieurs des revendications précédentes, **caractérisé en ce que** le système de verrouillage (52) est sollicité par ressort vers une de ses positions de pivotement.

5. Dispositif de prise de force selon une ou plusieurs des revendications précédentes, **caractérisé en ce que** le palier (34) comporte une bride (32) qui est assemblée de manière amovible avec la console (24).

6. Véhicule (10), en particulier un véhicule pour l'entretien des pelouses, jardins et champs, comportant un dispositif de prise de force selon une ou plusieurs des revendications précédentes.

## Claims

1. Power take-off device for a vehicle (10), in particular a vehicle for lawn, garden and land care, with a detachable power take-off drive shaft (12), which extends forwards from the vehicle (10) and the rearward end region (16)of which can be detachably connected to a drive source preferably provided in a rearward region of the vehicle (10) by displacement, a bracket (24) arranged in a front region of the vehicle (10), wherein a front end region (14) of the drive shaft (12) is supported by a bearing (34), which can be detachably attached to the bracket (24), **characterised in that** a locking mechanism (52) connected to the bracket (24) can hold the drive shaft (12) in an operating position on the bracket (24) and release it in a second position.

2. Power take-off device according to Claim 1, **characterised in that** the bearing (34) has a handle (40).

3. Power take-off device according to Claim 1 or 2, **characterised in that** the locking mechanism (52) can be connected to the bracket (24) to swivel and locks the bearing (34) in a first swivel position and releases it in a second swivel position.

4. Power take-off device according to one or more of the preceding claims, **characterised in that** the locking mechanism (52) is spring-loaded in the direction of one of its swivel positions.

5. Power take-off device according to one or more of the preceding claims, **characterised in that** the bearing (34) has a bearing flangette (32), which is detachably connected to the bracket (24).

6. Vehicle (10), in particular a vehicle for lawn, garden and land care, with a power take-off device according to one or more of the preceding claims.
